# EUROPÄISCHE PATENTANMELDUNG

(11) **EP 3 531 302 A1**
(43) Veröffentlichungstag der Anmeldung: **28.08.2019**
(21) Anmeldenummer: 19158686.6
(22) Anmeldetag: 21.02.2019
(51) Int. Cl.: G06F 16/33

(54) **COMPUTERIMPLEMENTIERTES VERFAHREN ZUM SUCHEN VON ANTWORTEN**

(30) Priorität: 27.02.2018 DE 102018104439
(71) Anmelder: DTMS GmbH, 55118 Mainz (DE)
(72) Erfinder: Solak, Imdat, 81539 München (DE)
(74) Vertreter: Rothkopf, Ferdinand

(57) **Zusammenfassung**

Die Erfindung betrifft ein computerimplementiertes Verfahren zum Suchen von Antworten mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Ausführen mindestens eines Suchalgorithmus, sowie ein Erzeugen und ein Speichern mindestens eines Ergebnis-Datensatzes erfolgt, wobei das Speichern des mindestens einen Ergebnis-Datensatzes in einer Ergebnis-Speichereinrichtung erfolgt, aus welcher der Antwort-Datensatz ausgewählt wird.

## Beschreibung

### Gebiet der Erfindung

Die Erfindung betrifft ein computerimplementiertes Verfahren zum Bereitstellen einer Auskunft mit den Verfahrensschritten: Eingeben eines Anfrage-Datensatzes, Ermitteln eines Antwort-Datensatzes zu dem Anfrage-Datensatz und Ausgeben des Antwort-Datensatzes.

### Hintergrund der Erfindung

Ein computerimplementiertes Verfahren wird auf einem Computer ausgeführt. Dafür ist ein Computerprogramm auf dem Computer installiert. Das Computerprogramm veranlasst den Computer mittels Anweisungen bzw. Befehlen dazu, bestimmte Aufgaben zu bearbeiten oder zu lösen. Eine solche Aufgabe ist das Suchen von Antworten. Dabei wird grundsätzlich versucht, mindestens eine Information in einer Informationsquelle zu finden. Dazu wird im ersten Schritt der Anfrage-Datensatz, mit dem die Information angefragt wird, in den Computer eingegeben. Anhand des eingegebenen Anfrage-Datensatzes sucht das Computerprogramm in einem zweiten Schritt nach der Information. Wird die gesuchte Information gefunden, wird diese mit dem Antwort-Datensatz in einem dritten Schritt von dem Computer ausgegeben.

Manchmal kommt es jedoch vor, dass die Information nur mit großem Zeitaufwand oder gar nicht gefunden wird, obwohl diese in der Informationsquelle zur Verfügung steht. Zudem passiert es ab und zu, dass die gefundene Antwort bzw. der ermittelte Antwort-Datensatz nicht die gewünschte Qualität aufweist, also nicht genau zu dem Anfrage-Datensatz passt.

Der Erfindung liegt daher die Aufgabe zugrunde, ein Verfahren zu schaffen, welches die Antwort effizient und passgenau bereitstellt.

### Zusammenfassung der Erfindung

Erfindungsgemäß ist ein computerimplementiertes Verfahren zum Suchen von Antworten geschaffen, mit den Verfahrensschritten: Eingeben eines Anfrage-Datensatzes, Ermitteln eines Antwort-Datensatzes zu dem Anfrage-Datensatz und Ausgeben des Antwort-Datensatzes, wobei bei dem Ermitteln des Antwort-Datensatzes ein Ausführen mindestens eines Suchalgorithmus, sowie ein Erzeugen und Speichern mindestens eines Ergebnis-Datensatzes erfolgt, wobei das Speichern des mindestens einen Ergebnis-Datensatzes in einer Ergebnis-Speichereinrichtung erfolgt, aus welcher der Antwort-Datensatz ausgewählt wird. Der Suchalgorithmus ist grundsätzlich eine eindeutige Handlungsvorschrift zum Suchen nach bestimmten Mustern oder Objekten in einem Suchraum. Dabei ist der Suchraum eine Menge, die nach zu findenden Objekten durchsucht werden soll. Es kommt vor, dass ein einzelner Suchalgorithmus nicht zum Ermitteln des Antwort-Datensatzes ausreicht. Das Ausführen mindestens eines Suchalgorithmus ermöglicht es, mit mehreren Handlungsvorschriften nach einem Antwort-Datensatz zu suchen. Bevorzugt werden also mehrere Suchalgorithmen nacheinander ausgeführt, die vorzugsweise nach ihrer Effizienz geordnet sind, wobei der effizienteste Suchalgorithmus zuerst ausgeführt wird. Bei dem Erzeugen und Speichern des mindestens einen Ergebnis-Datensatzes wird eine Zwischeninstanz beim Ermitteln des finalen Antwort-Datensatzes geschaffen. Dies ermöglicht einen flexibleren Umgang beim Ausgeben des Antwort-Datensatzes, insbesondere bei einer Mehrzahl von Ergebnis-Datensätzen. Es wird also eine Art Zwischenspeicher für potentielle Antwort-Datensätze geschaffen, aus denen, aus denen nach verschiedensten Kriterien der am besten passende Antwort-Datensatz zum Ausgeben ausgewählt wird..

Bei einer vorteilhaften Weiterbildung des erfindungsgemäßen computerimplementierten Verfahrens erfolgt bei dem Erzeugen des mindestens einen Ergebnis-Datensatzes jeweils ein Bestimmen eines Konfidenz-Istwerts für den Ergebnis-Datensatz und ein Vergleichen des Konfidenz-Istwerts mit einem Konfidenz-Sollwert. Mit einem Konfidenz-Wert ist hier grundsätzlich ein Grenzwert bzw. ein Konfidenzniveau für einen Vertrauensbereich bzw. ein Konfidenzintervall gemeint. Dieser Konfidenz-Wert ist hier also ein Maß für die Wahrscheinlichkeit, dass der erzeugte Ergebnis-Datensatz eine richtige Antwort auf eine angefragte Information bzw. den Anfrage-Datensatz beinhaltet. Dabei wird der Konfidenz-Sollwert festgelegt und der Konfidenz-Istwert berechnet. Vorzugsweise wird der Konfidenz-Istwert statistisch ermittelt. Das Vergleichen von Konfidenz-Istwert und Konfidenz-Sollwert ermöglicht also eine Aussage bzw. Information darüber, ob der Ergebnis-Datensatz den gesetzten Qualitätsansprüchen an einen zu ermittelnden Antwort-Datensatz genügt oder nicht. Mit dieser Information wird dann vorteilhaft über weitere Schritte entschieden, wie zum Beispiel Verwerfen und erneutes Erzeugen des Ergebnis-Datensatzes oder Übernehmen des Ergebnis-Datensatzes als Antwort-Datensatz.

Entsprechend wird bei dem Erzeugen des mindestens einen Ergebnis-Datensatzes bevorzugt jeweils der Ergebnis-Datensatz in der Ergebnis-Speichereinrichtung nur dann gespeichert, wenn der Konfidenz-Istwert größer als der Konfidenz-Sollwert ist. Somit werden nur solche Ergebnis-Datensätze aufbewahrt, die den gesetzten Qualitätsansprüchen genügen. Auf diese Weise können geeignete Ergebnis-Datensätze gesammelt und für eine spätere Verwendung vorgehalten werden. Vorzugsweise wird aus den gesammelten Ergebnis-Datensätzen derjenige mit dem höchsten Konfidenz-Istwert als Antwort-Datensatz übernommen. Dadurch wird die Wahrscheinlichkeit für einen qualitativ hochwertigen Antwort-Datensatz weiter erhöht.

Bei einer weiteren vorteilhaften Weiterbildung der Erfindung wird bei dem Ausführen des mindestens einen Suchalgorithmus mindestens eine Variante des Anfrage-Datensatzes erstellt und an den mindestens einen Suchalgorithmus übergeben. Mit einer Variante ist eine abgewandelte Version des Anfrage-Datensatzes gemeint. Die Möglichkeit, den Anfrage-Datensatz in mehr als einer Variante an den Suchalgorithmus übergeben zu können, erhöht die Chance, dass der Anfrage-Datensatz inhaltlich richtig erfasst bzw. verstanden wird. Somit erhöht sich auch die Wahrscheinlichkeit, dass ein richtiger und passgenauer Antwort-Datensatz ermittelt wird.

Darauf aufbauend wird bei dem Übergeben der mindestens einen Variante vorzugsweise mindestens ein V1-Anfrage-Datensatz mit dem originalen Anfrage-Datensatz, ein V2-Anfrage-Datensatz mit einer auf Eingabefehler geprüften Version des Anfrage-Datensatzes, ein V3-Anfrage-Datensatz mit einer um mindestens eine Information erweiterte Version des Anfrage-Datensatzes oder ein V4-Anfrage-Datensatz mit einer auf Eingabefehler geprüften und um mindestens eine Information erweiterte Version des Anfrage-Datensatzes übergeben. Kurzgefasst, der Antwort-Datensatz bleibt gleich, oder wird vor dem Übergeben geprüft und/oder ergänzt. Der V1-, V2-, V3- und der V4-Datensatz bilden vier Varianten des originalen bzw. eingegebenen Anfrage-Datensatzes. Wie oben bereits erwähnt, erhöht sich die Wahrscheinlichkeit für das Ermitteln eines richtigen und passgenauen Antwort-Datensatzes, je mehr von diesen Varianten an den Suchalgorithmus übergeben werden.

In vorteilhafter Weise erfolgt bei dem Ausführen des mindestens einen Suchalgorithmus eine Ähnlichkeits-Suche, vorzugsweise mittels des LSI, Annoy, FLANN, Yahoo! LSH oder Gensim. Bei der Ähnlichkeits-Suche werden Objekte identifiziert, die einer oder mehreren abzugleichenden Eingaben am ähnlichsten sind. Die Objekte sind dabei vorzugsweise Worte, Wortgruppen oder Texte. Algorithmen zur Ähnlichkeits-Suche sind hinsichtlich ihres Speicherbedarfs besonders effizient.

Die aufgeführten Algorithmen geben einen groben Überblick über das Spektrum an Suchalgorithmen zur Ähnlichkeits-Suche und werden im Folgenden kurz beschrieben. LSI steht für "Latent Semantic Indexing" und verwendet die mathematische Technik der Singulärwertzerlegung, um Muster in den Beziehungen zwischen Begriffen und Konzepten zu identifizieren, die in einer unstrukturierten Textsammlung enthalten sind. Annoy steht für "Approximate Nearest Neighbors Oh Yeah" bzw. "Ungefähre nächste Nachbarn" und wird beispielsweise verwendet, um ähnliche Musik vorzuschlagen. FLANN steht für "Fast Library for Approximate Nearest Neighbors" und ist eine Bibliothek zur schnellen Suche nach nahen Nachbarn mit einer Sammlung von Algorithmen, sowie einem System zur automatischen Auswahl des besten Algorithmus. Das "LSH" in Yahoo! LSH steht für "Locality-Sensitve Hashing". LSH formt Objekte in Hashwerte um und zielt darauf ab, die Wahrscheinlichkeit einer Kollision, also einer Umwandlung ähnlicher Objekte in denselben Hashwert, zu maximieren. Gensim ist ein robustes Open-Source-Werkzeug zur Themenmodellierung und wurde speziell zum Verarbeiten umfangreicher Textsammlungen entwickelt. Die hier aufgeführten Suchalgorithmen sind eine beispielhafte Auswahl und nicht dazu vorgesehen, den Schutzumfang der Erfindung einzuschränken. Aufgrund der Vielfalt an sich untereinander ergänzenden Algorithmen zur Ähnlichkeits-Suche führt die Nutzung derartiger Suchalgorithmen mit sehr hoher Wahrscheinlichkeit zu einem passgenauen Suchergebnis bzw. hier zum Ermitteln eines passgenauen Antwort-Datensatzes. Bevorzugt werden die oben genannten und/oder weitere Suchalgorithmen nacheinander ausgeführt, bis ein passgenauer Antwort-Datensatz ermittelt wurde.

Erfindungsgemäß vorteilhaft wird bei dem Ausführen des mindestens einen Suchalgorithmus ein Suchalgorithmus als ein Master-Algorithmus festgelegt, der als erster Suchalgorithmus ausgeführt wird. Der Master-Algorithmus wird somit als einziger Suchalgorithmus oder als erster Suchalgorithmus in einer sogenannten Algorithmus-Kette ausgeführt. Mit dem Master-Algorithmus kann ein zuerst auszuführender Suchalgorithmus festgelegt werden, der mit der höchsten Wahrscheinlichkeit zum Ermitteln eines passgenauen Antwort-Datensatzes führt und/oder der die geringsten Speicherressourcen beansprucht.

Bevorzugt wird ferner bei dem Ausführen des mindestens einen Suchalgorithmus mindestens ein Suchalgorithmus auf einer externen Hardwarekomponente ausgeführt. Dabei ist diese Hardwarekomponente vorzugsweise für ein effizientes Ausführen des separierten bzw. ausgelagerten Suchalgorithmus eingerichtet. Auf diese Weise werden Rechenleistung und Speicherressourcen des Computers geschont, auf dem das Verfahren ausgeführt wird.

Die Erfindung sieht ferner ein computerlesbares Speichermedium vor, mit einem Computerprogramm mit Befehlen, die bei dem Ausführen des Computerprogramms einen Computer dazu veranlassen, die Schritte mindestens einer der oben beschriebenen Ausführungsformen des computerimplementierten Verfahrens auszuführen. Das Speichermedium ist dafür vorgesehen, zumindest das Computerprogramm mit dem computerimplementierten Verfahren sicher zu speichern.

Gemäß der Erfindung ist ferner ein Datenverarbeitungssystem zum Ausführen eines computerimplementierten Verfahrens nach mindestens einem der oben beschriebenen Ausführungsformen bereitgestellt, bei dem das Datenverarbeitungssystem einen Computer, eine Eingabe-Einrichtung, eine Ausgabe-Einrichtung, ein Netzwerk und eine externe Hardwarekomponente aufweist, wobei der Computer ein Computerprogramm und ein Speichermedium umfasst. Das Datenverarbeitungssystem ist zum Organisieren von Daten vorgesehen, und bildet die Grundlage für die oben beschriebenen Ausführungsformen des computerimplementierten Verfahrens. Der Computer ist zum Verarbeiten von Eingabe-Daten, vorzugsweise Anfrage-Datensätzen, in Ausgabe-Daten, vorzugsweise Antwort-Datensätzen, bereitgestellt. Die Eingabe-Einrichtung ist vorgesehen, um die Eingabe-Daten in den Computer einzugeben, wobei diese Eingabe-Daten bevorzugt als Anfrage-Datensätze gestaltet sind. Die Ausgabe-Einrichtung ist vorgesehen, um die Ausgabe-Daten von dem Computer auszugeben, wobei diese Daten bevorzugt als Antwort-Datensätze gestaltet sind. Das Netzwerk bietet eine externe Informationsquelle für den Computer. Als Netzwerk wird vorzugsweise das Internet verwendet. Die externe Hardwarekomponente steht zum Ausführen mindestens eines Suchalgorithmus zur Verfügung. Das Computerprogramm ist zum Ausführen des computerimplementierten Verfahrens auf dem Computer vorgesehen. Das Speichermedium ist zum Speichern von Daten, insbesondere der Ergebnis-Datensätze, bereitgestellt. Sämtliche für das computerimplementierte Verfahren aufgeführte Vorteile gelten auch für das erfindungsgemäße Datenverarbeitungssystem.

Ferner sind weitere Ausführungsformen möglich, die das computerimplementierte Verfahren und das Datenverarbeitungssystem noch effizienter machen.

So erfolgt das Ausführen des mindestens einen Suchalgorithmus bevorzugt als eine Neuronalnetzwerk-Suche, vorzugsweise mittels eines Deep Learning Neuronalen Netzwerks. Deep Learning, auf Deutsch etwa tiefgehendes Lernen, bezeichnet eine Klasse von Optimierungsmethoden künstlicher neuronaler Netze, die zahlreiche Zwischenlagen zwischen Eingabeschicht und Ausgabeschicht haben und dadurch eine umfangreiche innere Struktur aufweisen.

In einer vorteilhaften Ausführungsform erfolgt das Ermitteln des Antwort-Datensatzes über mehrere Schritte bzw. über mehrere Suchalgorithmen. Ein einzelner Algorithmus reicht häufig nicht aus, um einen passgenauen Antwort-Datensatz zu liefern. Daher wird vorzugsweise eine beliebig erweiterbare Algorithmus-Kette aufgebaut. Dabei wird bevorzugt darauf geachtet, dass der nächste Schritt in der Algorithmus-Kette nur dann ausgeführt wird, wenn der aktuelle Schritt keinen Antwort-Datensatz mit ausreichender Wahrscheinlichkeit bzw. einen Konfidenz-Istwert über dem Konfidenz-Sollwert aufweist. Dies spart Zeit und Speicherressourcen.

In einer vorteilhaften Ausführungsform erfolgt eine gleichzeitige Übergabe aller verfügbaren Varianten des Anfrage-Datensatzes an den Suchalgorithmus. So werden alle Varianten des Anfrage-Datensatzes verwendet, bevor gegebenenfalls zum nächsten Schritt übergegangen wird, und die Algorithmus-Kette wird effizient genutzt.

Bei einer weiteren vorteilhaften Weiterbildung der Erfindung muss bei dem Ausführen des mindestens einen Suchalgorithmus, insbesondere eines Suchalgorithmus zur Ähnlichkeits-Suche, eine festgelegte Anzahl an Ergebnis-Datensätzen erzeugt werden, wobei vorzugsweise mindestens zehn Ergebnis-Datensätze erzeugt werden müssen. Die Ergebnis-Datensätze werden dabei bevorzugt in absteigender Reihenfolge hinsichtlich ihrer Ähnlichkeit zu dem Anfrage-Datensatz sortiert. Es wird also nicht der erstbeste, sondern der bestmögliche Ergebnis-Datensatz als Antwort-Datensatz verwendet, wodurch die Passgenauigkeit des Antwort-Datensatzes weiter gesteigert wird.

Bevorzugt werden die ermittelten Antwort-Datensätze verknüpft mit ihren Anfrage-Datensätzen in der Antwort-Speichereinrichtung gespeichert. Damit kann jeder ermittelte Antwort-Datensatz wiederverwendet werden. Die Antwort-Speichereinrichtung ist dabei vorzugsweise ein Festspeicher.

In vorteilhafter Weise wird die Neuronalnetzwerk-Suche auf einer separaten bzw. externen Hardwarekomponente ausgeführt. Die externe Hardwarekomponente kann besser an die Anforderungen von Suchalgorithmen mit Neuralnetzwerk-Suche angepasst werden. Die somit ausgelagerten Prozesse sparen dabei Rechenleistung und Speicherbedarf auf dem Computer.

Suchalgorithmen zur Neuronalnetzwerk-Suche nehmen wesentlich größerer Systemressourcen in Anspruch als Suchalgorithmen zur Ähnlichkeits-Suche. Daher wird ein Suchalgorithmus zur Neuronalnetzwerk-Suche vorzugsweise nur dann ausgeführt, wenn alle verfügbaren Suchalgorithmen zur Ähnlichkeits-Suche ausgeführt wurden und dabei kein Antwort-Datensatz ermittelt werden konnte, der ausreichend passgenau ist. Somit ist eine effiziente Abfolge bei dem Ausführen mehrerer Suchalgorithmen gewährleistet.

### Kurzbeschreibung der Zeichnungen

Nachfolgende wird ein Ausführungsbeispiel der erfindungsgemäßen Lösung anhand der beigefügten schematischen Zeichnungen näher erläutert. Es zeigt:
- Fig. 1: ein Blockdiagramm eines Ausführungsbeispiels eines erfindungsgemäßen Datenverarbeitungssystems,
- Fig. 2: das Detail II gemäß Fig. 1,
- Fig. 3: einen Programmablaufplan eines Ausführungsbeispiels eines erfindungsgemäßen computerimplementierten Verfahrens und
- Fig. 4: das Detail IV gemäß Fig. 3.

### Detaillierte Beschreibung der Erfindung

Zum besseren Verständnis werden im Folgenden zweistellige Bezugszeichen zum Bezeichnen von Komponenten und dreistellige Bezugszeichen zum Bezeichnen von Verfahrensschritten verwendet.

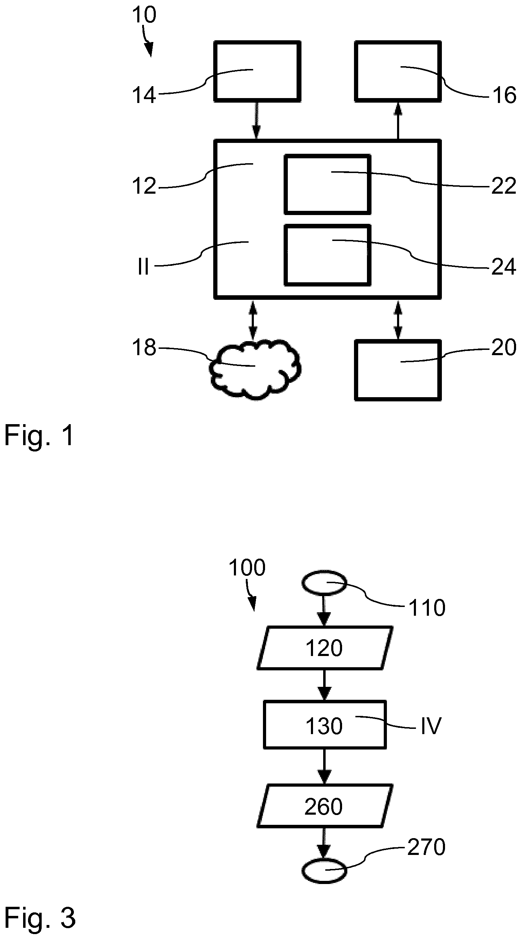

Fig. 1 zeigt ein Datenverarbeitungssystem 10 in einem sehr allgemeinen Blockdiagramm mit den Komponenten 12, 14, 16, 18, 20, 22 und 24. Dabei ist ein Computer 12 als größte Komponente dargestellt. Der Computer ist mit einer Eingabe-Einrichtung 14 verbunden, hier mittels eines Pfeils in Richtung des Computers veranschaulicht. Außerdem ist der Computer 12 mit einer Ausgabe-Einrichtung 16 verbunden, hier mittels eines Pfeils in Richtung in Richtung der Ausgabe-Einrichtung 16 gezeigt. Der Computer 12 ist ebenfalls verbunden mit einem Netzwerk 18 und einer externen Hardwarekomponente 20, jeweils dargestellt mit einem Doppelpfeil. Zudem sind ein Computerprogramm 22 und ein Speichermedium 24 als innere Komponenten des Computers 12 dargestellt.

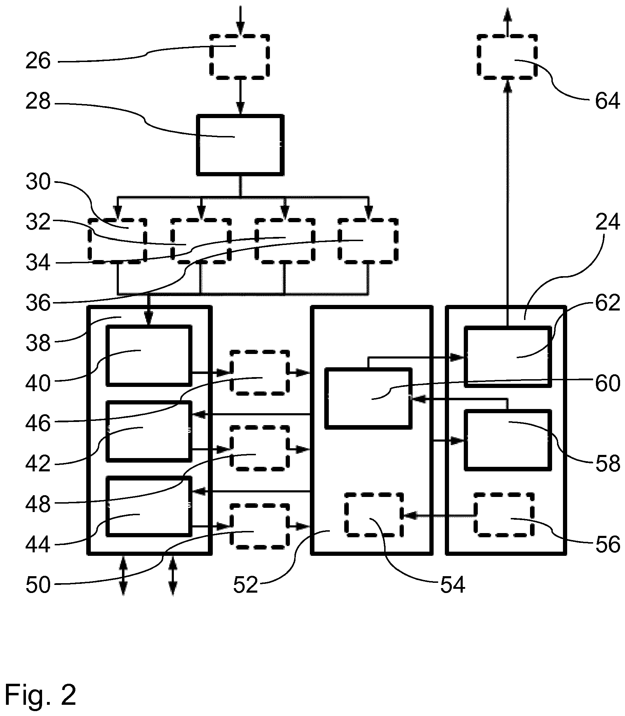

Die Eingabe-Einrichtung 14 und die Ausgabe-Einrichtung 16 sind für eine Kommunikation zwischen dem Computer 12 und einem Nutzer vorgesehen. Mittels der Eingabe-Einrichtung 14 werden Daten von dem Nutzer an den Computer 12 übertragen, wobei die Eingabe-Einrichtung 14 hier eine Tastatur ist. Mittels der Ausgabe-Einrichtung 16 werden Daten von dem Computer 12 an den Nutzer übergeben, wobei die Ausgabe-Einrichtung 16 hier ein Bildschirm ist. Bei dem Netzwerk 18 handelt es sich hier um das Internet, welches für den Computer 12 als Informationsquelle verwendet wird. Die externe Hardwarekomponente 20 ist vorgesehen, bestimmte sonst im Computer 12 ablaufenden Prozesse auszulagern. Das Computerprogramm 22 nutzt das Speichermedium 24 zum Speichern von Daten. In der nachfolgenden Figurenbeschreibung zu Fig. 2 sind die in dem Computer 12 vorgesehenen Komponenten, sowie von dem Computerprogramm 22 verwendete Komponenten und Datenobjekte detailliert und in ihren Beziehungen zueinander dargestellt. Mit den Komponenten sind sowohl Hardware-Komponenten, wie zum Beispiel das Speichermedium 24, als auch Software-Komponenten, wie zum Beispiel das Computerprogramm 22 oder Programm-Komponenten des Computerprogramms 22, gemeint.

In Fig. 2 sind die auf dem Computer 12 installierten und von dem Computerprogramm 22 verwendeten Komponenten und Datenobjekte gemäß Block II in Fig. 1 in einer detaillierten Form abgebildet. Dabei stellt ein Rechteck mit durchgehendem Rahmen eine Komponente und ein Rechteck mit gestricheltem Rahmen ein Datenobjekt dar. Als Einstieg in die Fig. 2 dient hier der von außen auf die Komponente 26 zeigende Pfeil. Dabei zeigt der Pfeil auf einen Anfrage-Datensatz 26. Der Anfrage-Datensatz 26 ist mit einer Varianten-Erstellungseinrichtung 28 verbunden, gekennzeichnet mit einem Pfeil in Richtung der Varianten-Erstellungseinrichtung 28. Von der Varianten-Erstellungseinrichtung 28 gehen vier Pfeile ab, wobei sich die zunächst überlagern und dann bei den Datenobjekten 30, 32, 34 und 36 enden. Dabei handelt es sich um Varianten des Anfrage-Datensatzes 26. Von diesen Varianten 30, 32, 34, und 36 führt jeweils ein Pfeil zu einer Algorithmus-Kette 38, genauer zu einem ersten Suchalgorithmus bzw. Master-Algorithmus 40.

In dieser Algorithmus-Kette 38 befinden sich neben dem Master-Algorithmus 40 noch ein zweiter Suchalgorithmus 42 und ein dritter Suchalgorithmus 44. Die zwei Doppelpfeile an der Algorithmus-Kette symbolisieren eine Verbindung zu weiteren Komponenten außerhalb des Computers 12 bzw. außerhalb des Blocks II in Fig. 1. Von den Suchalgorithmen 40, 42, 44 in der Algorithmus-Kette 38 führt jeweils ein Pfeil zu einem Datenobjekt 46, 48, 50. Dabei handelt es sich um einen ersten Ergebnis-Datensatz 46, einen zweiten Ergebnis-Datensatz 48 und einen dritten Ergebnis-Datensatz 50, von denen jeweils ein Pfeil zu einer Konfidenz-Prüfeinrichtung 52 führt. Umgekehrt führt jeweils ein Pfeil von der Konfidenz-Einrichtung 52 in die Algorithmus-Kette 38 zu dem zweiten Suchalgorithmus 42 und dem dritten Suchalgorithmus 44.

In der Konfidenz-Prüfeinrichtung 52 befindet sich ein Konfidenz-Istwert 54, auf den ein Pfeil von einem Konfidenz-Sollwert 56 zeigt. Der Konfidenz-Sollwert 56 befindet sich in dem Speichermedium 24. Von der Konfidenz-Prüfeinrichtung 52, genauer von dem Rahmen der Komponente 52 führt ein Pfeil in das Speichermedium 24 zu einer Ergebnis-Speichereinrichtung 58. Von dieser führt ein Pfeil in die Konfidenz-Prüfeinrichtung 52 zu einer Ergebnis-Sortiereinrichtung 60 und von dort wieder in das Speichermedium 24 zu einer Antwort-Speichereinrichtung 62. Von der Antwort-Speichereinrichtung 62 führt ein Pfeil zu einem Antwort-Datensatz 64. Der vom Antwort-Datensatz 64 wegführende Pfeil dient als Ausstieg aus der Fig. 2 und somit aus Block II in Fig. 1.

Nachdem die einzelnen auf dem Computer 12 installierten und von dem Computerprogramm 22 verwendeten Komponenten und Datenobjekte des Datenverarbeitungssystems 10 mit ihren Verbindungen aufgeführt wurden, erfolgt nun eine funktionale Erläuterung. Aus dem Anfrage-Datensatz 26 werden in der Varianten-Erstellungseinrichtung 28 vier Varianten 30, 32, 34, 36 erstellt. Es entstehen ein V1-Anfrage-Datensatz 30 mit dem originalen Anfrage-Datensatz 26, ein V2-Anfrage-Datensatz 32 mit einer auf Eingabefehler geprüften Version des Anfrage-Datensatzes 26, ein V3-Anfrage-Datensatz 34 mit einer um mindestens eine Information erweiterten Version des Anfrage-Datensatzes 26 und ein V4-Anfrage-Datensatz 36 mit einer auf Eingabefehler geprüften und um mindestens eine Information erweiterte Version des Anfrage-Datensatzes 26. Diese Varianten 30, 32, 34, 36 werden nun dem ersten Suchalgorithmus bzw. dem Master-Algorithmus 40 zugeführt. Der erste Suchalgorithmus 40 ist einer von drei Suchalgorithmen 40, 42, 44, die zu der Algorithmus-Kette 38 gehören. Einer dieser Suchalgorithmen 40, 42, 44 wurde als Master-Algorithmus 40 festgelegt und wird somit zuerst ausgeführt. Ob mindestens einer der beiden anderen Suchalgorithmen 42, 44 ebenfalls ausgeführt wird, hängt von dem Ergebnis-Datensatz 46 ab, welcher beim Ausführen des Master-Algorithmus 40 erzeugt wird.

In einer weiteren, hier nicht gezeigten Ausführungsform der Erfindung werden beim Ausführen eines Suchalgorithmus mehrere Ergebnis-Datensätze erzeugt. Vereinfacht und beispielhaft wird hier nur ein Ergebnis-Datensatz pro Suchalgorithmus dargestellt. Für den ersten Ergebnis-Datensatz 46 wird mittels einer Konfidenz-Prüfeinrichtung 52 ein Konfidenz-Istwert 54 bestimmt und mit dem Konfidenz-Sollwert 56 verglichen. Dieser Konfidenz-Istwert 54 ist ein Maß für die Wahrscheinlichkeit, dass der erzeugte Ergebnis-Datensatz 46 eine richtige Antwort bzw. eine passgenaue Information zu dem Anfrage-Datensatz 26 ist.

Der Konfidenz-Sollwert 56 stellt eine Art Schwelle dar, ab welcher ein Ergebnis-Datensatz, hier der erste Ergebnis-Datensatz 46, übernommen bzw. in der Ergebnis-Speichereinrichtung 58 gespeichert wird. Liefert ein Suchalgorithmus mehrere Ergebnis-Datensätze, so wird für jeden dieser Datensätze ein Konfidenz-Istwert 54 bestimmt und dieser mit dem Konfidenz-Sollwert 56 verglichen. Entsprechend wird jeder Ergebnis-Datensatz mit einem Konfidenz-Istwert 54 über dem Konfidenz-Sollwert 56 in der Ergebnis-Speichereinrichtung 58 gespeichert. Der Antwort-Datensatz 64 wird am schnellsten ermittelt, wenn in einer bevorzugten Ausführungsform gleich der erste Ergebnis-Datensatz mit einem Konfidenz-Istwert 54 über dem Konfidenz-Sollwert 56 als Antwort-Datensatz 64 in die Antwort-Speichereinrichtung 62 übernommen und ausgegeben wird.

Es werden aber alternativ in einer vorteilhaften Ausführungsform zunächst weitere geeignete Ergebnis-Datensätze in der Ergebnis-Speichereinrichtung 58 gesammelt, um diese anschließend mittels der Ergebnis-Sortiereinrichtung 60 nach ihren Konfidenz-Istwerten 54 zu sortieren und nur den Ergebnis-Datensatz mit dem höchsten Konfidenz-Istwert in der Antwort-Speichereinrichtung 62 zu speichern und als Antwort-Datensatz 64 auszugeben. Andererseits, wird mittels des Master-Algorithmus 40 kein Ergebnis-Datensatz 46 mit einem Konfidenz-Istwert 54 über dem Konfidenz-Sollwert 56 erzeugt, so wird der zweite Suchalgorithmus 42 und gegebenenfalls auch der dritte Suchalgorithmus 44 ausgeführt. Anschließend wird mit dem zweiten Ergebnis-Datensatz 48 und gegebenenfalls mit dem dritten Ergebnis-Datensatz 50 ebenso vorgegangen wie für den ersten Ergebnis-Datensatz 46 beschrieben.

Die Fig. 3 zeigt ein computerimplementiertes Verfahren 100 in einem sehr allgemeinen Programmablaufplan mit den Verfahrensschritten 110, 120, 130, 260 und 270. Für die in dieser und den folgenden Figurenbeschreibungen genannten Komponenten werden die Bezugszeichen aus den Figuren 1 und 2 verwendet. Wie bereits erwähnt, wurden zur besseren Unterscheidbarkeit zweistellige Bezugszeichen für Komponenten und dreistellige Bezugszeichen für Verfahrensschritte, im Folgenden auch Schritte genannt, verwendet. Der Einstieg in das Verfahren 100 erfolgt mit einem Start 110, gefolgt von einem Eingeben 120 des Anfrage-Datensatzes 26. Nun erfolgt ein Ermitteln 130 des Antwort-Datensatzes 64, bevor dann ein Ausgeben 260 des Antwort-Datensatzes 64 als letzter Verfahrensschritt vor dem Ende 270 erfolgt. Wie das Ermitteln 130 dieses Antwort-Datensatzes 64 erfolgt, wird in den nachfolgenden Figurenbeschreibungen detailliert dargestellt.

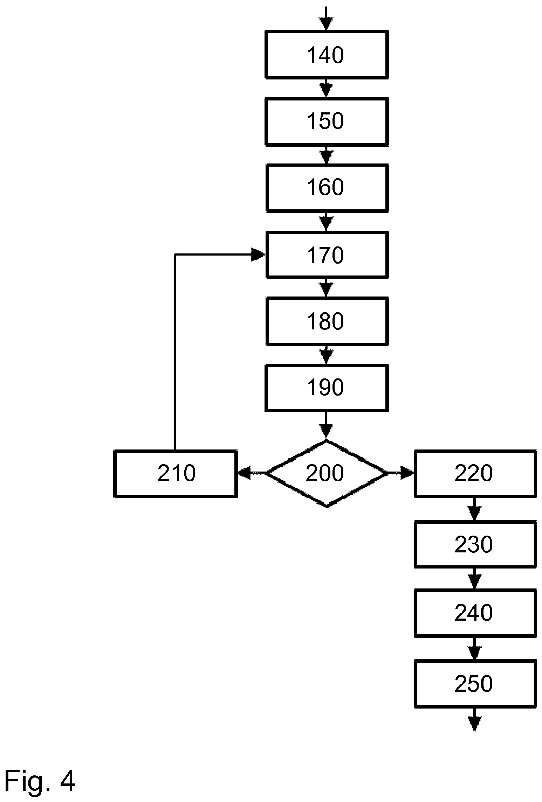

In Fig. 4 ist der Verfahrensschritt zum Ermitteln 130 des Antwort-Datensatzes 64 gemäß Detail IV in Fig. 3 in einer detaillierteren Form veranschaulicht und beinhaltet die Verfahrensschritte 140 bis 250. In Schritt 140 wird mindestens eine Variante des Anfrage-Datensatzes 26 erstellt, hier der V2-Anfrage-Datensatz 32 und der V4-Anfrage-Datensatz 36. Diese Varianten 32, 36 werden in Schritt 150 an die Algorithmus-Kette 38 übergeben. In Schritt 160 wird aus den verfügbaren Suchalgorithmen 40, 42, 44 ein Master-Algorithmus 40 festgelegt, damit dieser als erster ausgeführt wird. An dieser Stelle wird eine iterative Zählvariable x mit dem Wert 1 belegt. In Schritt 170 wird nun der x-te Suchalgorithmus ausgeführt, hier also der erste Suchalgorithmus bzw. der Master-Algorithmus 40. Dabei handelt es sich hier um einen Algorithmus zur Ähnlichkeits-Suche, hier speziell um den Suchalgorithmus FLANN.

Als Resultat wird in Schritt 180 ein erster Ergebnis-Datensatz 46 erzeugt, für den in Schritt 190 ein Konfidenz-Istwert 54 mittels der Konfidenz-Prüfeinrichtung 52 bestimmt wird. Dieser Konfidenz-Istwert 54 wird in Schritt 200 mit dem Konfidenz-Sollwert 56 verglichen. Liegt der Konfidenz-Istwert 54 unter dem Konfidenz-Sollwert 56, wovon hier beispielhaft ausgegangen wird, so wird in Schritt 210 der Ergebnis-Datensatz 46 verworfen, die Zählvariable x hochgezählt mit x=x+1 und anschließend zu Schritt 170 zurückgekehrt. In Schritt 170 wird nun wieder der x-te Suchalgorithmus ausgeführt, hier also nun der zweite Suchalgorithmus 42. Dabei handelt es sich um einen Suchalgorithmus zur Neuronalnetzwerk-Suche, hier speziell mittels eines Deep Learning Neuronalen Netzwerks.

Entsprechend wird in Schritt 180 ein zweiter Ergebnis-Datensatz 48 erzeugt, für den in Schritt 190 ein Konfidenz-Istwert 54 bestimmt und dieser in Schritt 200 mit dem Konfidenz-Sollwert 56 verglichen wird. Hier wird nun beispielhaft davon ausgegangen, dass der Konfidenz-Istwert 54 über dem Konfidenz-Sollwert 56 liegt. Somit wird in Schritt 220 der Ergebnis-Datensatz 48 in der Ergebnis-Speichereinrichtung 58 auf dem Speichermedium 24 gespeichert. Es wird hier beispielhaft davon ausgegangen, dass in der Ergebnis-Speichereinrichtung 58 bereits mehrere weitere Ergebnis-Datensätze vorliegen, die einen über dem Konfidenz-Sollwert 56 liegenden Konfidenz-Istwert 54 haben. Diese werden in Schritt 230 mittels einer Ergebnis-Sortiereinrichtung 60 der Größe des Konfidenz-Istwerts 54 nach geordnet, beginnend mit dem größten Konfidenz-Istwert 54. Der sich dabei ergebende erste Ergebnis-Datensatz wird in Schritt 240 als Antwort-Datensatz 64 festgelegt und in Schritt 250 in der Antwort-Speichereinrichtung 62 gespeichert. Schließlich wird der ermittelte Antwort-Datensatz 64 zum Ausgeben weitergeleitet.

### Bezugszeichenliste

- 10: Datenverarbeitungssystem
- 12: Computer
- 14: Eingabe-Einrichtung
- 16: Ausgabe-Einrichtung
- 18: Netzwerk
- 20: externe Hardwarekomponente
- 22: Computerprogramm
- 24: Speichermedium
- 26: Anfrage-Datensatz
- 28: Varianten-Erstellungseinrichtung
- 30: Variante des Anfrage-Datensatz
- 32: Variante des Anfrage-Datensatz
- 34: Variante des Anfrage-Datensatz
- 36: Variante des Anfrage-Datensatz
- 38: Algorithmus-Kette
- 40: Master-Algorithmus / Suchalgorithmus
- 42: Suchalgorithmus
- 44: Suchalgorithmus
- 46: Ergebnis-Datensatz
- 48: Ergebnis-Datensatz
- 50: Ergebnis-Datensatz
- 52: Konfidenz-Prüfeinrichtung
- 54: Konfidenz-Istwert
- 56: Konfidenz-Sollwert
- 58: Ergebnis-Speichereinrichtung
- 60: Ergebnis-Sortiereinrichtung
- 62: Antwort-Speichereinrichtung
- 64: Antwort-Datensatz
- 100: Computerimplementiertes Verfahren
- 110: Start
- 120: Eingeben eines Anfrage-Datensatzes
- 130: Ermitteln eines Antwort-Datensatzes zu dem Anfrage-Datensatz
- 140: Erstellen mindestens einer Variante des Anfrage-Datensatzes
- 150: Übergeben der mindestens einen Variante an eine Algorithmus-Kette
- 160: Festlegen eines Suchalgorithmus als Master-Algorithmus; x=1
- 170: Ausführen eines x-ten Suchalgorithmus
- 180: Erzeugen mindestens eines Ergebnis-Datensatzes
- 190: Bestimmen mindestens eines Konfidenz-Istwerts
- 200: Für jeden Ergebnis-Datensatz: Konfidenz-Istwert > Konfidenz-Sollwert?
- 210: Nein - Verwerfen und zum nächsten Suchalgorithmus; x=x+1
- 220: Ja - Speichern in einer Ergebnis-Speichereinrichtung
- 230: Sortieren der Ergebnis-Datensätze nach ihren Konfidenz-Istwerten
- 240: Festlegen als Antwort-Datensatz bei höchstem Konfidenz-Istwert
- 250: Speichern Antwort-Datensatz in Antwort-Speichereinrichtung
- 260: Ausgeben des Antwort-Datensatzes
- 270: Ende

## Patentansprüche

1. Computerimplementiertes Verfahren (100) zum Suchen von Antworten mit den Verfahrensschritten:
- Eingeben (120) eines Anfrage-Datensatzes (26),
- Ermitteln (130) eines Antwort-Datensatzes (64) zu dem Anfrage-Datensatz (26) und
- Ausgeben (260) des Antwort-Datensatzes (64),
**dadurch gekennzeichnet, dass** bei dem Ermitteln (130) des Antwort-Datensatzes (64) ein Ausführen (170) mindestens eines Suchalgorithmus (40, 42, 44), sowie ein Erzeugen (180) und ein Speichern (220) mindestens eines Ergebnis-Datensatzes (46, 48, 50) erfolgt, wobei das Speichern (220) des mindestens einen Ergebnis-Datensatzes (46, 48, 50) in einer Ergebnis-Speichereinrichtung (58) erfolgt, aus welcher der Antwort-Datensatz (64) ausgewählt wird.

2. Computerimplementiertes Verfahren (100) nach Anspruch 1,
**dadurch gekennzeichnet, dass** bei dem Erzeugen (180) des mindestens einen Ergebnis-Datensatzes (46, 48, 50) jeweils ein Bestimmen (190) eines Konfidenz-Istwerts (54) für den Ergebnis-Datensatz (46, 48, 50) und ein Vergleichen (200) des Konfidenz-Istwerts (54) mit einem Konfidenz-Sollwert (56) erfolgt.

3. Computerimplementiertes Verfahren (100) nach Anspruch 2,
**dadurch gekennzeichnet, dass** bei dem Erzeugen (180) des mindestens einen Ergebnis-Datensatzes (46, 48, 50) jeweils das Speichern (220) des Ergebnis-Datensatzes (46, 48, 50) in der Ergebnis-Speichereinrichtung (58) nur dann erfolgt, wenn der Konfidenz-Istwert (54) größer als der Konfidenz-Sollwert (56) ist.

4. Computerimplementiertes Verfahren (100) nach einem der vorhergehenden Ansprüche,
**dadurch gekennzeichnet, dass** bei dem Ausführen (170) des mindestens einen Suchalgorithmus (40, 42, 44) ein Erstellen (140) mindestens einer Variante (30, 32, 34, 36) des Anfrage-Datensatzes (26) und ein Übergeben (150) der mindestens einen Variante (30, 32, 34, 36) an den mindestens einen Suchalgorithmus (40, 42, 44) erfolgt.

5. Computerimplementiertes Verfahren (100) nach Anspruch 4,
**dadurch gekennzeichnet, dass** bei dem Übergeben (150) der mindestens einen Variante (30, 32, 34, 36) mindestens ein V1-Anfrage-Datensatz (30) mit dem originalen Anfrage-Datensatz (26), ein V2-Anfrage-Datensatz (32) mit einer auf Eingabefehler geprüften Version des Anfrage-Datensatzes (26), ein V3-Anfrage-Datensatz (34) mit einer um mindestens eine Information erweiterte Version des Anfrage-Datensatzes (26) oder ein V4-Anfrage-Datensatz (36) mit einer auf Eingabefehler geprüften und um mindestens eine Information erweiterte Version des Anfrage-Datensatzes (26) übergeben wird.

6. Computerimplementiertes Verfahren (100) nach einem der vorhergehenden Ansprüche,
**dadurch gekennzeichnet, dass** bei dem Ausführen (170) des mindestens einen Suchalgorithmus (40, 42, 44) eine Ähnlichkeits-Suche erfolgt, vorzugsweise mittels LSI, Annoy, FLANN, Yahoo! LSH oder Gensim.

7. Computerimplementiertes Verfahren (100) nach einem der vorhergehenden Ansprüche,
**dadurch gekennzeichnet, dass** bei dem Ausführen (170) des mindestens einen Suchalgorithmus (40, 42, 44) ein Festlegen (160) eines Suchalgorithmus (40, 42, 44) als ein Master-Algorithmus erfolgt, der als erster Suchalgorithmus ausgeführt wird.

8. Computerimplementiertes Verfahren (100) nach einem der vorhergehenden Ansprüche,
**dadurch gekennzeichnet, dass** bei dem Ausführen (170) des mindestens einen Suchalgorithmus (40, 42, 44) mindestens ein Suchalgorithmus (40, 42, 44) auf einer externen Hardwarekomponente (20) ausgeführt wird.

9. Computerlesbares Speichermedium (24) mit einem Computerprogramm (22) mit Befehlen, die bei dem Ausführen des Computerprogramms (22) einen Computer (12) dazu veranlassen, die Schritte eines computerimplementierten Verfahrens (100) nach einem der Ansprüche 1 bis 8 auszuführen.

10. Datenverarbeitungssystem (10) zum Ausführen eines computerimplementierten Verfahrens (100) nach einem der Ansprüche 1 bis 8, bei dem das Datenverarbeitungssystem (10) einen Computer (12), eine Eingabe-Einrichtung (14), eine Ausgabe-Einrichtung (16), ein Netzwerk (18) und eine externe Hardwarekomponente (20) aufweist, wobei der Computer (12) ein Computerprogramm (22) und ein Speichermedium (24) umfasst.
